# EUROPEAN PATENT APPLICATION

(11) **EP 3 575 919 A1**
(43) Date of publication of application: **04.12.2019**
(21) Application number: 18174754.4
(22) Date of filing: 29.05.2018
(51) Int. Cl.: G06F 1/20, H01L 23/473

(54) **DLC BLOCK FOR USE IN ELECTRONIC AND ELECTRIC COMPONENTS**

(71) Applicant: DCX SP. Z O.O., 20-325 Lublin (PL)
(72) Inventor: Szadkowski, Maciej, 05-500 Piaseczno (PL)
(74) Representative: Kondrat, Mariusz

(57) **Abstract**

A DLC block for use in electronic and electric components consisting of coolant casing and coldplate wherein coolant casing consists of three chambers: one inner chamber and two outer chambers, wherein outer chambers are closed with coldplates with a use of screws.

## Description

### BACKGROUND

Electrical and electronic components may generate high load of heat. This includes diodes, power supplies, batteries, capacitors, PCB boards, switch, router, server boards, GPU cards and chips, and other electronic and electric components. Also hashing hardware such as Antminer devices and other similar electronic boards use high number of dedicated asic or fpga chips, or gpu coprocessors for calculation purposes. Typically, such units run at high computational speed and due to their design they produce head while operating. An excess of heat on a chip can cause it to melt or burn, which in turn causes damage.

Document CN106102419 (A) relates to a liquid cooling cold plate and a manufacturing method thereof. The liquid cooling cold plate has high heat dissipation efficiency and can carry out efficient heat dissipation on electronic devices. A method of manufacturing a liquid cooled cold plate includes: first forming a flow path on a substrate, then attaching the substrate and a cover plate, and connecting using vacuum diffusion welding. The liquid cooling cold plate is characterized in that it comprises a base plate and a cover plate, at least one flow channel is arranged on the base plate, the cover plate is attached to the base plate and welded together by vacuum diffusion welding, and the cover plate constitutes the flow channel, the upper side wall. Document US2013034767 (A1) relates to a cooling system operable to cool a battery pack or other device through a heat exchange operation supported, at least in part, with cycling of a coolant relative to a coldplate or other thermally conducting surface of the device and/or attached thereto. The battery pack liquid cooling system revealed in the document comprises a coldplate operable to exchange heat with a battery pack; and a coolant tank operable to exchange heat with the coldplate, the coolant tank having: a channel for directing a coolant from an inlet to an outlet and an inlet accumulator configured to pool the coolant prior to entry into the channel.
Document CN107039706 (A) relates to a liquid cooling plate of a power battery. The revealed liquid cooling plate comprises a upper cooling plate, a lower cooling plate, a first water inlet and a water outlet, wherein a first cooling runner and the upper cooling plate form a first water inlet pipe when the upper cooling plate and the lower cooling plate are connected by soldering, a second cooling runner and the upper cooling plate form a first water outlet pipe, the first water inlet pipe and the first water outlet pipe communicates with each other and are arranged at same interval, the first water inlet pipe communicates with the first water inlet, and the first water outlet pipe communicates with the water outlet. By the structure, the liquid cooling plate of the power battery is simple in fabrication process, the upper cooling plate and the lower cooling plate can be implemented by die punching, the first water inlet and the water outlet are ordinary aluminum-alloy pipe joints, the upper cooling plate, the lower cooling plate and the ordinary aluminum-alloy pipe joints can be formed in one time by tunnel furnace soldering, and a heat conduction pad and a thermal insulation pad can be fixed on the liquid cooling plate of the power battery by a pasting mode.

Document CN206350282 (U) discloses a utility model of combined liquid-cooled cooling plate structure that comprise a metal cooling plate and a front-end cover and a rear-end cover. The metal cooling plate is a section with a plurality of independent straight channels arranged side by side as the mobile main channel for the flow of the cooling liquid, and the front and rear faces of the metal cooling plate contain one of the liquid outlets of the main channel of the cooling liquid flow and the next main channel of the cooling liquid flow. A groove for communicating with the two main channels of the cooling fluid is opened at the position of the liquid inlet, and the front-end cover is detachably connected to the front-end surface of the metal cooling plate, and the front end. The cover is sealed between the notches of each of the grooves provided on the front-end surface of the metal cooling plate, and the rear end cover is detachably connected to the rear end surface of the metal cooling plate. In the above, the rear end cover is sealed with the notch of each of the grooves provided on the rear end surface of the metal cooling plate so that the front end cover and the metal cooling Gap between each of said grooves on the front face of the plate The clearance between the rear end cover and each of the grooves provided on the rear end surface of the metal cooling plate forms a coolant flow auxiliary passage, and all of the cooling liquid flows through the main passage.
Document TWM540463 (U) relates to a lightweight liquid cooling plate set and heat dissipation system featuring plastic frame body. Revealed liquid cooling plate set comprises: a plastic frame, comprising a plurality of sidewalls, at least one accommodating opening, and a plurality of fixing elements, wherein the plurality of sidewalls are connected and defined to form the accommodating opening; and the plurality of fixing elements are disposed in part of the sidewalls of the plurality of sidewalls; and at least one liquid cooling cavity unit is assembled with the plastic frame and is embedded in the accommodating opening of the plastic frame, and at least one surface is exposed; at least one power semiconductor device module is assembled with a plurality of fixing elements and a part of the fixing elements of the plurality of fixing elements to be fixed on the plastic frame and attached to the liquid cooling; at least one surface of the cavity unit; and a system board component assembled with a plurality of fixing components of the plurality of fixing components by a plurality of lock components so that the liquid cooling plate group is fixed to the system board component.

Liquid cooled cold plates available on the market are used for cooling large surfaces - batteries such as automobiles, electronics, medical devices, military applications, aviation. Their construction is:
- aluminum plates with grooves in which a copper tube is guided: such elements cool with one side where the tube, sometimes the design allows for both sides to be cooled but in limited way. They use only the flow taking place on the surface of about 10-15% of the entire block. The heat is absorbed by heat transfer from the aluminum block to the copper, which makes the boards vulnerable to galvanic corrosion http://www.lytron.com/Tools-and-Technical-Reference/Application-Notes/Avoiding-Galvanic-Corrosion
- a longitudinal housing, which is empty inside with inlet and outlet, through which the liquid flows. The housing is usually made of aluminum. Such a system does not use microchannels or impingement, only simple flow is used, which means that the device has limited possibilities of cooling really hot devices. The housing can not be fitted to the device (electronic boards do not have a homogeneous structure, there are components on it that enforce the shape of the plate so that it touches every element). Therefore, large, simple applications are used - flat surface of the battery, car radiators, etc. **https://goo.gl/6ABV6o**

In order to dissipate the heat generated by such infrastructure, each hashing chip has a heat dissipation radiator put on top of it. However, while the radiator itself can transfer some of heat out, in order to work effectively, cold air must be present in the environment. The cold air, in most cases must be produced with an Air Conditioning system, which in order to be efficient must be powerful enough and ran at enough capacity to cool a number of such units in a single room.

The air conditioning systems in such installations, are typically less efficient than liquid cooling systems, as liquid has higher capacity than cold air. Additionally, less energy must be used to cool liquids in such systems.

According to the invention:
- the flow is takes place on 100% of the coldplate surface;
- the coolant is simultaneously jet impinged on 100% of the coldplate surface providing the same temperature for all cooled components, not warming up within the tube as in standard cooling plates;
- the casing is made of plastic e.g. POM and not of aluminum (lower price and weight),
- the system works 100% effectively on two sides thanks to two external chambers and one internal chamber;
- DLC block is modularly adaptable to any device that is cooled,
- DLC block might be in different size and shape for specific requirement of cooled electrical or electronic components,
- set of smaller DLC blocks may be arranged in one structure interconnected with through push to lock quick disconnect ports to coold specific system surfaces and sides,
- coldplate can be made of aluminum or copper depending on requirements,
- the best available technologies are used in the cooling of electronics, that is jet impingement and, if necessary, micro-channels

### BRIEF SUMMARY

The aim of the invention was to provide liquid cooling component that is cheap in manufacturing, lightweight, modular, and that can provide significantly better heat transfer efficiency than currently available coldplates. Device should be usable electronic devices cooling, battery cooling, avionics cooling and also hashing boards (blockchain system calculation device) cooling.

The proposed invention is a heat dissipation system's element that utilizes liquid rather than air and is designed specifically for hashing hardware. The element is a DLC block that can be put directly on hashing boards and is designed to support both one-phase and dual-phase heat dissipation cycle.

### The design of the DLC block

The block consists of two elements:
a) Polyxymethylene coolant casing
b) coldplates
c) gaskets, screws and other mounting elements
d) quick disconnect inlet and outlet ports (push to lock connectors)

### The coolant casing design features:

e) an internal chamber, accessible via a ¼ inch tubing connector. The chamber's walls have nozzles arranged to match the chips placed on the hashing hardware. The walls of the chamber are placed at an angle, so that the liquid pressure is maintained throughout the chamber.
f) 2 outer chambers on the left and right of the internal chambers. The chambers are interconnected at the bottom and have an ¼ inch outflow tubing socket.

Coldplates are solid copper plates that are screwed with flat-head screws onto the coolant exchange unit's sides. The copper plates are attached to the hashing hardware's chips and are used for transfer of heat between the coolant casing and the hardware and are used as a replacement for the original radiators.

A DLC block for use in electronic and electric components consisting of coolant casing and coldplate wherein coolant casing consists of three chambers: one inner chamber and two outer chambers, and outer chambers are closed with coldplates with a use of screws and gaskets. The coolant casing is made of light polymer, especially polyoxymethylene.
The inner chamber's walls have jet nozzles arranged to match the chips placed on the hashing hardware or location of other hot components.
The coldplate and coolant casing might be in different size and shape for specific requirement of cooled electrical or electronic components while set of smaller DLC blocks may be arranged in one structure interconnected with through push to lock quick disconnect ports to coold specific system surfaces and sides
The DLC block has coldplate with changeable structure and adapted to structure of components and chips on electronic board. The inner chamber has one push to lock quick disconnect inlet and both outer chambers have common push to lock quick disconnect outlet.
The walls of the chamber are placed at an angle, so that the liquid pressure is maintained throughout the chamber. The inner chamber is accessible via tubing connector and outer chambers are interconnected at the bottom and have an outflow tubing socket.

### Location of the DLC block

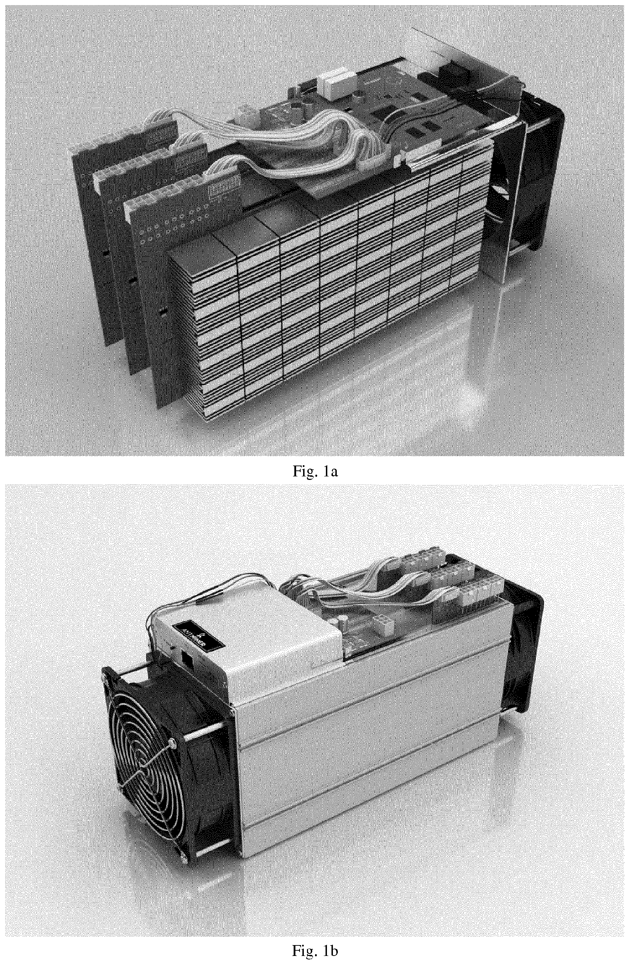

The DLC blocks are designed to be placed between 2 hashing boards in a manner that matches the shape of the hashing board. Typically, hashing units consist of 3 hashing boards (see Fig. 1). 2 blocks are thus needed to cool such a unit.

### BRIEF DESCRIPTION OF THE DRAWINGS

One or more aspects of the present invention are particularly pointed out and distinctly claimed as examples in the claims at the conclusion of the specification. The foregoing and other objects, features, and advantages of the invention are apparent from the following detailed description taken in conjunction with the accompanying drawings in which:
Fig. 1a and 1b depict one embodiment of a Antminer hashing boards with Antminer S9 device with enclosure and without enclosure, with 2 large fans and set of large heatsinks for aircooling.
Fig. 2 depicts one embodiment of a DLC block
Fig. 3 depicts one embodiment of chambers of the coolant casing
Fig. 4 depicts one embodiment of nozzles on the sides of the internal chamber
Fig. 5 depicts one embodiment of a Antminer hashing boards with DLC block outlet ports side

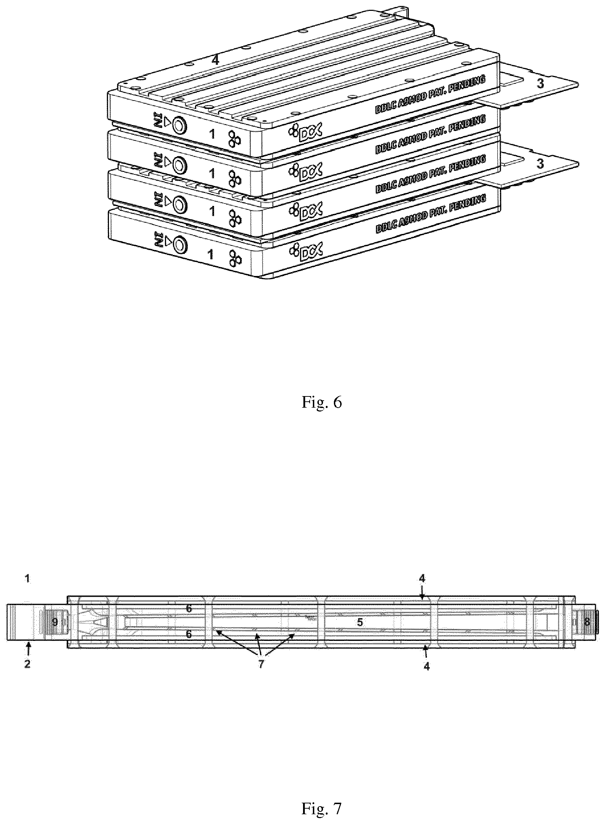

Fig. 6 depicts 4 embodiments of cooling blocks with PCB / Electronic boards (Antminer S9 hashboards) with heatsinks , enclosure, fans removed and replaced with DLC cooling block
Fig. 7 depicts one embodiment of vertical cross section of DLC block coolant casing (2) and visible structure of inner chamber (5) and two outer chambers of the coolant casing (6) with jet nozzles (7) simultaneously connecting both outer chambers.

### DETAILED DESCRIPTION

Fig. 1 depicts a conventional Antminer unit with hashing boards. Components of the computing device in the blockchain system for cryptocurrency transactions https://i0.wp.com/blockoperations.com/wp-content/uploads/2016/07/antminer-open-for-cleaning-1024x640.jpg?resize=1024%2C640

The conventional Antiminer cosists of aluminum housing for 3 or more calculation boards (hashboards), 3 or more discs with small heaters (1x1cm) radiator mounted on both sides - about 120 heatsinks on one board, ventilation forced ventilation, card - controller, power supply.

The devices are cooled by air passed through heat sinks, using a forced circuit with two strong fans. In the case of dense processing (many devices in one place) it forces the use of very strong industrial airflow, or for the use of air conditioning, and for the location of large processing centers in the northern hemisphere with low average air temperature. Cooling capacity is limited.

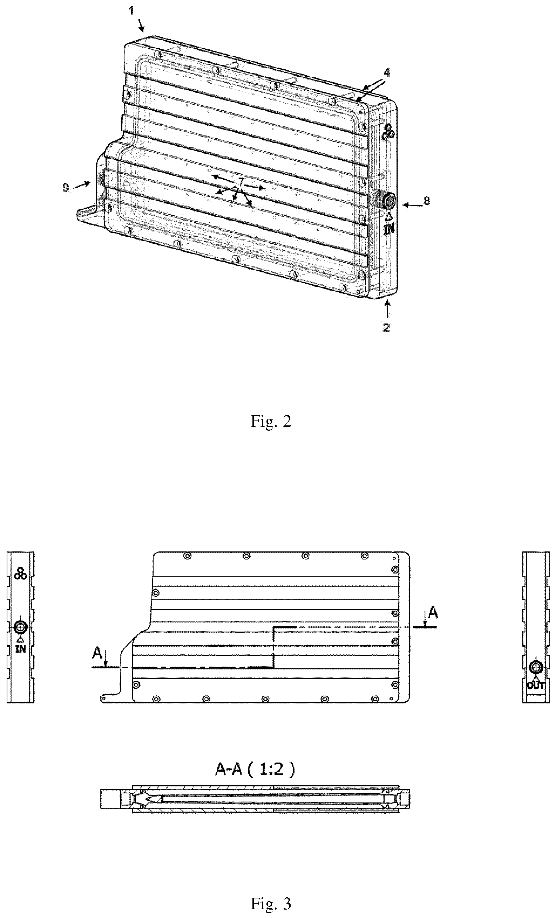

Fig. 2 depicts one embodiment of a DLC block. DLC block 1 consists of coolant casing 2, with one inner 5 and two outer chambers 6a and 6b of the coolant casing. Outer chambers 6a and 6b are closed with coldplates 4 with a use of screws. Structure of coldplate 4 is changeable and adapted to structure of components and chips on electronic board 3. Inner chamber 5 has one push to lock quick disconnect inlet 8 and both outer chambers have common push to lock quick disconnect outlet 9.

Fig. 3 depicts one embodiment of chambers of the coolant casing. Inner chamber (5) has constricting shape, thus improving liquid dynamics during flow from push to lock quick disconnect inlet (8) and maintaining the same pressure on all jet nozzles (7). On both sides of inner chamber of the coolant casing (2) are located two facing opposite sides outer chambers of the coolant casing (2). Those chambers have common push to lock quick disconnect outlet (9). Chambers are interconnected with jet nozzles (7).

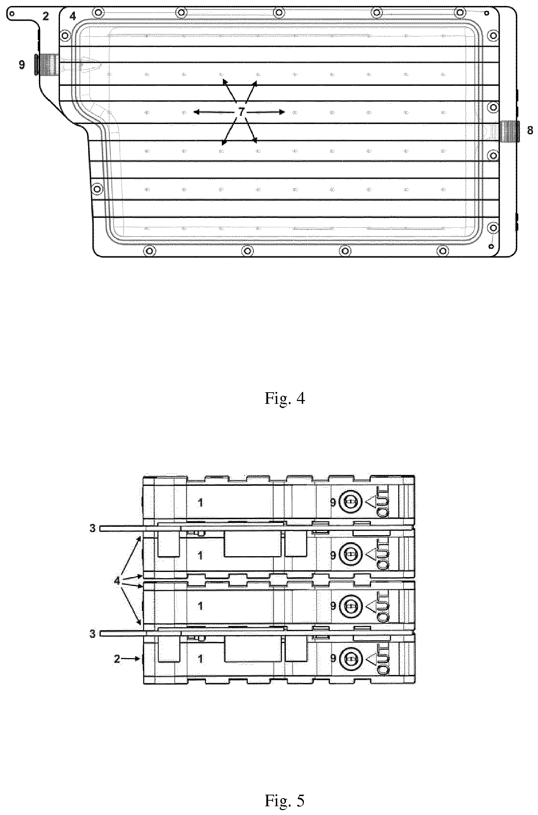

Fig. 4 depicts one embodiment of nozzles on the sides of the internal chamber. Jet nozzles (7) are located on whole area of chambers on both sides. Jet nozzles (7) are positioned in that way that provide constant flow of liquid jet in the position where hot chip is located on the other side of coldplate. Jet nozzles (7) are also directed under specific angle, minimising pressure drop of flowing coolant.

Fluid flows into coolant casing (2) through push to lock quick disconnect inlet (8) into inner chamber (5). Then coolant is pushed through jet nozzles (7) simultaneously to both sides of inner chamber (5) into two, facing opposite sides, outer chambers of the coolant casing (6). Coolant is flowing through jet nozzles (7) hitting coldplate cooper or alluminium (4) exactly in the location of hot electronic components (asic or fpga or memory chips). Then fluid flows through outer chambers of the coolant casing (6) and exits coolant casing (2) through common push to lock quick disconnect outlet (9).
The main features of the invention are as follows:
a) 3-chamber structure and cools on two sides
b) the casing is not made of aluminum or other metal and a lightweight polymer, e.g. POM
c) Cooling method:
   - is positioned so that the jets hit the height of the cooled components, so it effectively cools selected hot components;
   - uniformly and effectively cools 100% of the space of this block - cooler fluid flows across the entire width of this block and does not heat up as in standard blocks where we have an aluminum plate through which the copper tube passes and fluid flowing through it heats up;
   - includes 100% direct cooling (not 20% of the block as tubes in standard cold plates).

### Features of the block and advantages of the technology

The block features jet impingement, which allows the liquid to be applied directly at heat sources. The liquid-based dissipation of heat is much more energy efficient than air based cooling and thus allows a significant cost reduction, as less electricity is consumed while running the infrastructure.

The cooling systems that utilize the hashing hardware DLC run at stable temperatures, which vastly contributes to efficiency of the hardware itself and its longevity. The operational conditions of the system and the temperature of the cooled infrastructure is maintained no matter the external conditions.

The efficiency of the DLC block, coupled with its small size and design that matches the dimension of hashing hardware, allows the infrastructure to be arranged more densely without the risk of overheating.

Liquid DLC block systems are efficient enough to replace the air conditioning infrastructure entirely, which contributes to the reduction of noise generated by the installation.

The push to lock connectors allow quick and easy maintenance and installation in any rack setup and connection of couple of DLC blocks in one loop or coldplate structure.

The design of the DLC block features jet impingement, which allows the use of dual-phase cooling, a process which allows the most efficient heat dissipation. While the use of a dual-phase cooling is possible with the design of the block, the end-user can use a variety of coolants in a single-phase cycle (e.g. proprietary water, glycol-based mix).

## Claims

1. A DLC block for use in electronic and electric components consisting of coolant casing (2) and coldplate (4) wherein coolant casing (2) consists of three chambers: one inner chamber (5) and two outer chambers (6a) and (6b), wherein outer chambers (6a) and (6b) are closed with coldplates (4) with a use of screws and gaskets.

2. The DLC block according to claim 1, wherein coolant casing (2) is made of light polymer, especially polyoxymethylene.

3. The DLC block according to claim 1 or 5, wherein the inner chamber's walls have jet nozzles (7) arranged to match the chips placed on the hashing hardware or location of other hot components.

4. The DLC block according to claim 1 wherein coldplate (4) and coolant casing (2) might be in different size and shape for specific requirement of cooled electrical or electronic components while set of smaller DLC blocks may be arranged in one structure interconnected with through push to lock quick disconnect ports (8 and 9) to coold specific system surfaces and sides

5. The DLC block according to claim 1, having coldplate (4) with changeable structure and adapted to structure of components and chips on electronic board (3).

6. The DLC block according to claim 1, wherein inner chamber (5) has one push to lock quick disconnect inlet (8) and both outer chambers (6a) and (6b), have common push to lock quick disconnect outlet (9).

7. The DLC block according to claim 1, wherein the walls of the chamber are placed at an angle, so that the liquid pressure is maintained throughout the chamber.

8. The DLC block according to claim 1, wherein the inner chamber (5) is accessible via tubing connector and outer chambers (6a) and (6b) are interconnected at the bottom and have an outflow tubing socket.
